# EUROPÄISCHE PATENTSCHRIFT

(11) **EP 2 400 195 B1**
(45) Veröffentlichungstag und Bekanntmachung des Hinweises auf die Patenterteilung: **25.05.2016**
(21) Anmeldenummer: 11005041.6
(22) Anmeldetag: 21.06.2011
(51) Int. Cl.: F16K 35/06

(54) **Bediengriff einer Armatur**
Operating handle of a fitting
Poignée de commande d'une armature

(30) Priorität: 25.06.2010 DE 202010009521 U
(43) Veröffentlichungstag der Anmeldung: 28.12.2011
(73) Patentinhaber: Gebr. Kemper GmbH + Co. KG Metallwerke, 57462 Olpe (DE)
(72) Erfinder: Tinkloh, Thomas, 57462 Olpe (DE)
(74) Vertreter: Grünecker Patent- und Rechtsanwälte PartG mbB

(56) Entgegenhaltungen:
- WO-A1-98/49483
- DE-A1- 10 060 760
- DE-C1- 19 644 533
- DE-C1- 19 650 937

## Beschreibung

Die vorliegende Erfindung betrifft eine Absperrarmatur mit einem Armaturengehäuse, in dem eine mit einem Ventilkörper zusammenwirkende Spindel drehbar gelagert ist. Die Spindel trägt eine Handhabe. Des Weiteren ist eine Sicherungseinrichtung vorgesehen, durch deren Betätigung die Handhabe zur Vermittlung des Drehmomentes mit der Spindel koppelbar ist.

Die vorliegende Erfindung betrifft insbesondere eine Absperrarmatur für Fluide, speziell für Trink- oder Brauchwasser, die in einem öffentlichen Raum zugänglich ist. Eine Absperrarmatur kann insbesondere eine solche sein, wie sie aus dem auf die Anmelderin zurückgehenden DE-U-298 20 782 bzw. der EP 2 090 813 A2 bekannt ist. Bei diesen Absperrarmaturen handelt es sich um so genannte frostsichere Armaturen, die ein gegebenenfalls mehrteiliges Armaturengehäuse aufweisen, welches eine Gebäudewand durchdringt, so dass ein an der Spindel angeordneter Ventilkörper mit einem durch das Gehäuse ausgebildeten Ventilsitz zum Verschluss der Armatur mit erheblichem Abstand zu der Gebäudeaußenseite vorgesehen sind, d.h. an einem Ort, der aufgrund der Isolation und der Wärme des Gebäudes zu keiner Zeit einfriert, wohingegen die Handhabe die Gebäudeaußenwand außenseitig überragt, so dass die Armatur von außen betätigt werden kann.

Solche Absperrarmaturen können zur Entnahme von Trink- bzw. Brauchwasser an öffentlichen Plätzen oder auch in öffentlichen Räumen vorgesehen sein. In diesem Fall ergibt sich die Notwendigkeit, die Armatur gegenüber unautorisierter Betätigung zu sichern. Hierzu ist es bekannt, endseitig an dem Gehäuse eine Handhabe vorzusehen, die mit einer Sicherungseinrichtung versehen ist. Bei einer solchen Sicherungseinrichtung handelt es sich üblicherweise um ein Zylinderschloss, welches mit einem Schlüssel von einer Verschließstellung in eine Betriebsstellung gebracht werden kann. In der Verschließstellung wird bei der Betätigung der Handhabe ein dort wirkendes Drehmoment nicht auf die Spindel übertragen. In der Betriebsstellung ist die Handhabe über die Sicherungseinrichtung mit der Spindel gekoppelt, so dass eine Drehbewegung der Handhabe auf die Spindel übertragen wird, um die Armatur abzusperren bzw. Wasser über die Armatur zu entnehmen.

Eine aus dem Stand der Technik bekannte Absperrarmatur hat eine Handhabe, die ein verdrehfest mit der Spindel verbundenes Formteil umgibt und in sich aufnimmt. Dieses Formteil hat ein distales Ende, welches verdrehfest mit einem freien Ende der Spindel verbunden ist. Ein proximales Ende des Formteils ist als Zylinderabschnitt ausgebildet, der sich zwischen einem distalen Ende des Gehäuses und einer an der Handhabe ausgesparten Bohrung befindet. Dieser Zylinderabschnitt bildet an seiner Innenumfangsfläche eine Gleitfläche aus, die mit eine Außenumfangsfläche des Gehäuses zusammenwirkt. Bei Betätigung der Handhabe in der Betriebsstellung gleitet diese Gleitfläche über der Außenumfangsfläche des Gehäuses. An der Außenumfangsfläche des Formteils liegt die Wandung einer an der Handhabe ausgesparten Bohrung jedenfalls bei leicht exzentrischer Anordnung von Handhabe und Spindel bzw. Gehäuse an.

Bei diesem vorbekannten Stand der Technik besteht die Möglichkeit, die Spindel auch in der Verschließstellung über die Handhabe zu drehen, d.h. die Armatur zu betätigen. Wird bei der vorbekannten Armatur die Handhabe rechtwinklig zu der Längsachse der Spindel verkantet, so können im Bereich des Zylinderabschnitts Reibkräfte eingeleitet werden, welche bei Drehung der Handhabe eine Rotation des Formteils und damit der Spindel ermöglichen. Damit wird die Absperrwirkung der Sicherheitseinrichtung überbrückt, was ungewollt ist.

Ein Beispiel für den zuvor skizzierten Stand der Technik ist beispielsweise durch die DE196 44 533 C1 gegeben, die einen abschließbaren Drehgriff mit einem einen Schließzylinder haltenden Zwischenbauteil offenbart, welches zwischen dem mit der Spindel verbundenen Formteil und der Handhabe vorgesehen ist. Auch bei diesem Stand der Technik besteht die Möglichkeit, durch Verkanten der Handhabe rechtwinklig zu der Längsachse der Spindel ein Drehmoment zu übertragen und damit die gewünschte Absperrwirkung zu überbrücken.

Der vorliegenden Erfindung liegt das Problem zugrunde, eine Absperrarmatur anzugeben, die sich nicht in der zuvor beschriebenen Weise manipulieren lässt.

Zur Lösung des obigen Problems wird mit der vorliegenden Erfindung eine Absperrarmatur mit den Merkmalen von Anspruch 1 angegeben.

Diese unterscheidet sich von der gattungsbildenden Absperrarmatur durch eine Gleitfläche, die dem Gehäuse zugeordnet ist und auf welcher die Handhabe drehbar geführt ist. Während im Stand der Technik die Handhabe drehbar an der Außenumfangsfläche des Formteiles geführt ist, erfolgt eine entsprechende Führung bei der erfindungsgemäßen Absperrarmatur über eine Gleitfläche, die dem Gehäuse zugeordnet ist. Dabei kann die Gleitfläche unmittelbar an dem Gehäuse vorgesehen sein. Sie kann aber auch an einem separaten Bauteil vorgesehen sein, welches mit dem Gehäuse verbunden ist. Jedenfalls ist die Gleitfläche im Einbauzustand üblicherweise ortsfest an dem Gehäuse vorgesehen. Wesentlich ist, dass eine Manipulation, beispielsweise durch Beanspruchung der Handhabe, über ein Biegemoment, welches sich rechtwinklig zu der Längserstreckung der Spindelachse erstreckt, nicht mehr gegen ein Bauteil reibt, welches der Spindel zugeordnet ist, sondern an einem Bauteil, welches dem Gehäuse zugeordnet ist. Die Gleitfläche führt wegen einzuhaltender Toleranzen die Drehbewegung der Handhabe üblicherweise nicht bei exakt koaxialer Ausrichtung von Handhabe und Spindel bzw. Gehäuse. Eine Führung der Drehbewegung der Handhabe über die Gleitfläche ist aber dann gegeben, wenn die Handhabe leicht winkelig gegenüber der Längsachse der Spindel bzw. des Gehäuses angestellt wird. Bei dieser in der Praxis ohne weiteres gegebenen Ausrichtung reibt die Handhabe zumindest gegen einen Teilbereich der umfänglich ausgebildeten Reibfläche.

Bevorzugte Weiterbildungen der erfindungsgemäßen Absperrarmatur sind in den abhängigen Ansprüchen angegeben.

Weitere Einzelheiten und Vorteile der vorliegenden Erfindung ergeben sich aus der nachfolgenden Beschreibung in Verbindung mit der Zeichnung. In dieser zeigen:
- Figur 1: eine Seitenansicht auf ein Ausführungsbeispiel eines distalen Endes einer Absperrarmatur;
- Figur 2: eine Längsschnittansicht entlang der Linie A-A gemäß Figur 1;
- Figur 3: eine Längsschnittansicht entlang der Linie B-B gemäß Figur 2 in der Betriebsstellung und
- Figur 4: die Schnittansicht gemäß Figur 3 in einer Verschließstellung.

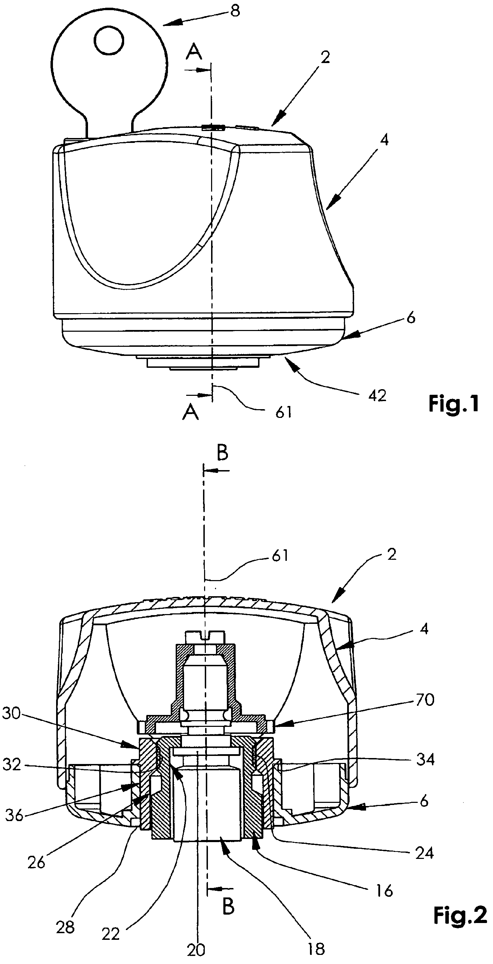

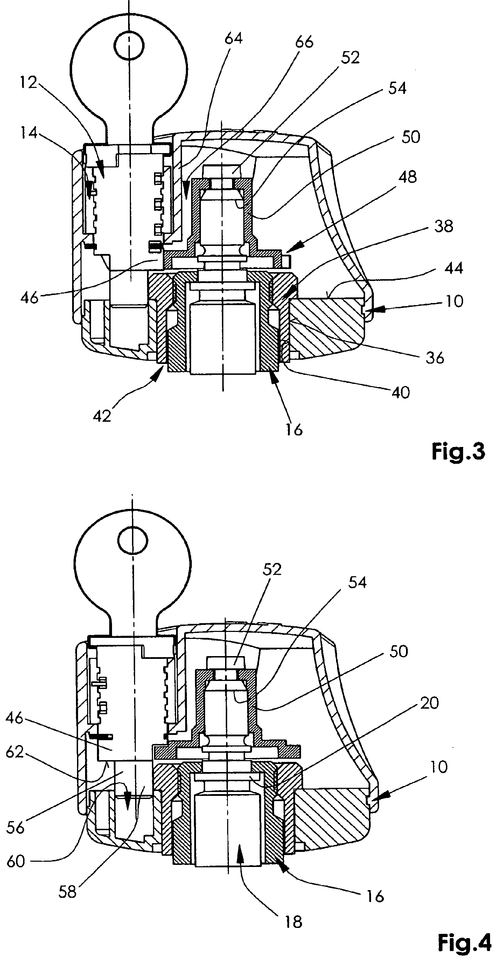

Die Figur 1 zeigt eine Seitenansicht des Ausführungsbeispiels, die im Wesentlichen lediglich die Handhabe 2 mit einem Handhabenkopf 4 und einer Handhabenbasis 6 erkennen lässt. Von der Handhabe 2 ragt ein auf die Handhabe 2 aufgesteckter Schlüssel 8 eines Schließzylinders 12, der in den Figuren 3 und 4 erkennbar ist und in einer Ausnehmung 14 der Handhabe 2 aufgenommen ist. Der Handhabenkopf 4 ist an seinen proximalen Ende über einen an dem Innenumfang vorgesehenen Rastvorsprung 10 mit der Handhabenbasis 6 verrastet.

Die Schnittansichten der Figuren 2 bis 4 zeigen ein freies, distales Ende eines nicht vollständig dargestellten Gehäuses 16, welches einen endseitigen Bereich einer Spindel 18 umgibt und einen an der Spindel 18 ausgebildeten Flansch 20 umgreift, um die Spindel 18 in axialer Richtung zu fixieren. Der übrige Teil der Absperrarmatur kann beispielsweise wie aus der DE 298 20 782 U1 beschriebenen ausgebildet sein.

Ein distaler Gehäusestutzen 22 des Gehäuses 16 ist mit einem Außengewinde 24 versehen. Auf dieses Außengewinde 24 ist eine Hülse 26 aufgeschraubt, die proximal einen Mantelabschnitt 28 und distal einen verbreiterten Hülsenkopf 30 aufweist, dessen Innenumfang mit einem Innengewinde 32 versehen ist welcher mit dem Außengewinde 24 in Eingriff ist, und der radial außen einen Absatz 34 ausformt, welcher eine durch den Mantelabschnitt 28 an seiner Außenumfangsfläche ausgebildete Gleitfläche 36 in axialer Richtung und distal begrenzt. Somit umgreift die Handhabe 2 den Absatz 34. An der Außenumfangsfläche des Hülsenkopfes 30 sind Funktionsflächen, beispielsweise Polygonalflächen für ein Werkzeug vorgesehen, so dass die Hülse 26 auf das Gehäuse 16 aufgeschraubt werden kann.

Die Handhabenbasis 6 ist mit einer Bohrung 38 versehen, welche eine zu der Gleitfläche 36 korrespondierend ausgebildete Gleitgegenfläche 40 ausformt. Der Mantelabschnitt 28 endet proximal in etwa höhengleich mit dem proximalen Ende 42 der Handhabenbasis 6, sofern die Handhabenbasis 6 mit ihrer distalen Oberfläche 44 an dem Absatz 34 anliegt.

In den Figuren 3 und 4 links ist der Schließzylinder 12 in dem Handhabenkopf 4 in Schnittansicht dargestellt. Zu erkennen ist ein Riegelabschnitt 46 des Schließzylinders 12, der in axialer Richtung leicht vor dem distalen axialen Ende der Hülse 26 vorgesehen ist. Höhengleich mit dem Riegelabschnitt 46 befindet sich ein verbreiterter Flansch 48, der durch ein Formteil 50 ausgeformt ist, welches endseitig die Spindel 18 umgibt und über eine Befestigungsschraube 52 mit dieser verschraubt ist. Ein freies Ende 54 der Spindel 18 kann Formschlussflächen aufweisen, die mit korrespondierend hierzu an dem Innenumfang des Formteils 50 ausgebildeten Gegenflächen zusammenwirken, um das Formteil 50 formschlüssig verdrehfest gegenüber der Spindel 18 zu sichern.

Der Schließzylinder 12 hat einen Haltestutzen 56, der am freien proximalen Ende des Schließzylinders 12 vorgesehen ist und sich unmittelbar benachbart zu der Außenumfangsfläche des Hülsenkopfes 30 befindet. Lediglich ein vorderer mit geringer axialer Länge ausgebildeter Kranz 58 des Haltestutzens 56 befindet sich in einer Stutzenaufnahme 60, die durch die Handhabenbasis 6 ausgebildet wird. Diese Aufnahme des Kranzes 58 in der Stutzenaufnahme 60 sichert den Schließzylinder 12 in radialer Richtung und in Umfangsrichtung, d.h. in Richtung quer zu einer Achse 61 der Spindel 18. Der Riegelabschnitt 46 bildet eine Endfläche 62 aus, die sich in der Betriebsstellung unmittelbar oberhalb des stirnseitigen Endes der Hülse 26 befindet (vgl. Figur 3).

Wie weiterhin die Schnittansichten gemäß Figuren 3 und 4 erkennen lassen, ist zwischen einer die Ausnehmung 14 begrenzenden und durch den Handhabenkopf 4 ausgebildeten Wandung 64 des Handhabenkopfes 4 ein hinreichender Abstand 66 eingestellt. Dieser Abstand 66 bewirkt, dass auch bei einer gewissen Schrägstellung der Handhabe 2 gegenüber der Achse 61 der Spindel 18 die Handhabe 2 nicht gegen das Formteil 50 reibend angelegt werden kann. Danach kann auch im Falle einer gewissen Manipulation der Absperrarmatur kein Drehmoment über die in Ihrer Verschließstellung befindliche Handhabe 2 auf die Spindel 18 übertragen werden.

Die Figur 3 zeigt das Ausführungsbeispiel in der Betriebsstellung. In dieser greift der Riegelabschnitt 46 des Schließzylinders 12 in eine an dem Außenumfang des Flansches 48 ausgebildete Verriegelungsverzahnung 70 ein. Damit ist die Handhabe 2 verdrehfest mit dem Formteil 50 und damit der Spindel 18 gekoppelt.

Die Figur 4 zeigt die Verschließstellung, in welcher der Riegelabschnitt 46 durch Verschwenken des Schlüssels 8 um 180° gedreht ist, so dass der Riegelabschnitt 46 außer Eingriff mit der Verriegelungsverzahnung 70 ist. Dementsprechend kann die Handhabe 2 gedreht werden, so dass das so über Reibung erzeugte Drehmoment auf die Hülse 26 und nicht auf die Spindel 18 übertragen wird.

### Bezugszeichenliste

- 2: Handhabe
- 4: Handhabenkopf
- 6: Handhabenbasis
- 8: Schlüssel
- 10: Rastvorsprung
- 12: Schließzylinder
- 14: Ausnehmung
- 16: Gehäuse
- 18: Spindel
- 20: Flansch
- 22: distaler Gehäusestutzen
- 24: Außengewinde
- 26: Hülse
- 28: Mantelabschnitt
- 30: Hülsenkopf
- 32: Innengewinde
- 34: Absatz
- 36: Gleitfläche
- 38: Bohrung
- 40: Gleitgegenfläche
- 42: proximales Ende
- 44: distale Oberfläche der Handhabenbasis
- 46: Riegelabschnitt
- 48: verbreiterter Flansch
- 50: Formteil
- 52: Befestigungsschraube
- 54: freies Ende
- 56: Haltestutzen
- 58: Kranz
- 60: Stutzenaufnahme
- 61: Achse
- 62: Endfläche
- 64: Wandung
- 66: Abstand
- 70: Verriegelungsverzahnung

## Patentansprüche

1. Absperrarmatur mit einem Ventilkörper, einer Spindel und einem Armaturengehäuse, in dem die mit dem Ventilkörper zusammenwirkende Spindel (18) drehbar gelagert ist, welche eine Handhabe (2) trägt, und mit einer Sicherungseinrichtung, durch deren Betätigung die Handhabe (2) zur Vermittlung eines Drehmomentes mit der Spindel (18) koppelbar ist,
**gekennzeichnet durch**
eine an dem Gehäuse (16) ortsfest vorgesehene Gleitfläche (40), die unmittelbar an dem Gehäuse (16) oder an einem separaten und mit dem Gehäuse (16) verbundenen Bauteil (26) vorgesehen ist und auf welcher die Handhabe (2) drehbar geführt ist.

2. Absperrarmatur nach Anspruch 1, **dadurch gekennzeichnet, dass** an einem distalen Ende der Gleitfläche (36) ein Absatz (34) vorgesehen ist, der von der Handhabe (2) umgriffen ist.

3. Absperrarmatur nach Anspruch 1 oder 2, **dadurch gekennzeichnet, dass** die Gleitfläche (36) und/oder der Absatz (34) durch eine Hülse (26) ausgebildet ist, die das Gehäuse (16) umgibt und mit dem Gehäuse (16) verbunden ist.

4. Absperrarmatur nach Anspruch 3, **dadurch gekennzeichnet, dass** die Hülse (26) und das Gehäuse (16) miteinander verschraubt sind.

5. Absperrarmatur nach Anspruch 3 oder 4, **dadurch gekennzeichnet, dass** ein distales Ende der Hülse (26) Funktionsflächen für ein Werkzeug zum Aufschrauben der Hülse (26) auf das Gehäuse (16) aufweist.

6. Absperrarmatur nach einem der vorherigen Ansprüche, **gekennzeichnet durch** ein verdrehfest mit der Spindel (18) verbundenes und daran endseitig vorgesehenes Formteil (50), welches eine Verriegelungsfläche (70) ausbildet, die bei gekoppelter Spindel (18) mit einem Riegelelement (46) der Sicherungseinrichtung (12) zusammenwirkt und in axialer Richtung vor dem Gehäuse (16) und/oder der Hülse (26) endet.

7. Absperrarmatur nach Anspruch 6, **dadurch gekennzeichnet, dass** das Formteil (50) an seinem proximalen Ende einen verbreiterten Flansch (48) ausformt, welcher die Verriegelungsfläche (70) ausbildet.

8. Absperrarmatur nach einem der vorherigen Ansprüche, **dadurch gekennzeichnet, dass** die Handhabe (2) zumindest zweiteilig ausgebildet ist mit einer mit der Gleitfläche (36) zusammenwirkenden Handhabenbasis (6) und einem die Sicherungseinrichtung tragenden Handhabenkopf (4).

9. Absperrarmatur nach Anspruch 8, **dadurch gekennzeichnet, dass** der Handhabenkopf (4) die Handhabenbasis (6) übergreift und mit dieser verrastet ist.

10. Absperrarmatur nach Anspruch 8 oder 9, **dadurch gekennzeichnet, dass** zwischen dem Handhabenkopf (4) und der Spindel (18) und/oder dem Formteil (50) ein Abstand (66) ausgebildet ist, der derart bemessen ist, dass bei jedweder manueller Beanspruchung der Handhabe (2) in einer Verschließstellung ein direkter Kontakt zwischen dem Handhabenkopf (4) und der Spindel (18) bzw. dem Formteil (50) unterbleibt.

## Claims

1. Shut-off fitting having a valve body, a spindle and a fitting housing in which the spindle (18), which cooperates with the valve body and bears a handle (2), is rotatably mounted, and having a securing device, through the actuation of which the handle (2) can be coupled to the spindle (18) in order to transmit a torque,
**characterized by**
a sliding surface (40) which is provided in a fixed location on the housing (16) and which is provided directly on the housing (16) or on a separate component (26) connected to the housing (16), and on which the handle (2) is rotatably guided.

2. Shut-off fitting according to claim 1, **characterized in that** a shoulder (34) is provided at a distal end of the sliding surface (36), which shoulder is encompassed by the handle (2).

3. Shut-off fitting according to claim 1 or 2, **characterized in that** the sliding surface (36) and/or the shoulder (34) is formed by a sleeve (26) which surrounds the housing (16) and is connected to the housing (16).

4. Shut-off fitting according to claim 3, **characterized in that** the sleeve (26) and the housing (16) are screwed to one another.

5. Shut-off fitting according to claim 3 or 4, **characterized in that** a distal end of the sleeve (26) has functional surfaces for a tool for screwing the sleeve (26) onto the housing (16).

6. Shut-off fitting according to any one of the preceding claims, **characterized by** a shaped part (50) which is provided on the end of the spindle (18) and is connected to said spindle in such a way as to rotate therewith, said shaped part forming a locking surface (70) which, in the coupled state of the spindle (18), cooperates with a locking element (46) of the securing device (12) and ends in the axial direction in front of the housing (16) and/or the sleeve (26).

7. Shut-off fitting according to claim 6, **characterized in that** the shaped part (50) forms at its proximal end a widened flange (48) which forms the locking surface (70).

8. Shut-off fitting according to any one of the preceding claims, **characterized in that** the handle (2) is formed of at least two parts, with a handle base (6) cooperating with the sliding surface (36) and a handle head (4) bearing the securing device.

9. Shut-off fitting according to claim 8, **characterized in that** the handle head (4) engages over the handle base (6) and is latched to the latter.

10. Shut-off fitting according to claim 8 or 9, **characterized in that** a gap (66) is formed between the handle head (4) and the spindle (18) and/or the shaped part (50), which gap is dimensioned such that, in the event of any manual loading of the handle (2) in a locked position, direct contact between the handle head (4) and the spindle (18) and/or the shaped part (50) is prevented.

## Revendications

1. Robinetterie ou vanne d'arrêt comprenant un obturateur de vanne, une broche, et un corps de vanne dans lequel est montée en rotation la broche (18) qui interagit avec l'obturateur de vanne et porte une poignée de manoeuvre (2), l'ensemble comprenant également un dispositif de sécurité par l'actionnement duquel la poignée de manoeuvre (2) peut être couplée à la broche (18) pour la transmission d'un couple,
**caractérisée par**
une surface de glissement (40) prévue en position fixe sur le corps de vanne (16), qui est réalisée directement sur le corps de vanne (16) ou sur une pièce (26) séparée, reliée au corps de vanne (16), et sur laquelle est guidée en rotation la poignée de manoeuvre (2).

2. Robinetterie ou vanne d'arrêt selon la revendication 1, **caractérisée en ce qu'**à une extrémité distale de la surface de glissement (36) est prévu un gradin (34), qui est entouré par la poignée de manoeuvre (2).

3. Robinetterie ou vanne d'arrêt selon la revendication 1 ou la revendication 2, **caractérisée en ce que** la surface de glissement (36) et/ou le gradin (34) est ou sont réalisés par une douille (26), qui entoure le corps de vanne (16) et est reliée au corps de vanne (16).

4. Robinetterie ou vanne d'arrêt selon la revendication 3, **caractérisée en ce que** la douille (26) et le corps de vanne (16) sont vissés l'un avec l'autre.

5. Robinetterie ou vanne d'arrêt selon la revendication 3 ou la revendication 4, **caractérisée en ce qu'**une extrémité distale de la douille (26) présente des surfaces fonctionnelles destinées à un outil pour visser la douille (26) sur le corps de vanne (16).

6. Robinetterie ou vanne d'arrêt selon l'une des revendications précédentes, **caractérisée par** une pièce de forme (50) liée de manière fixe en rotation à la broche (48) et prévue à l'extrémité de cette dernière, et formant une surface de verrouillage (70), qui, pour une broche (18) couplée, interagit avec un élément de verrouillage (46) du dispositif de sécurité (12) et se termine, dans la direction axiale, avant le corps de vanne (16) et/ou la douille (26).

7. Robinetterie ou vanne d'arrêt selon la revendication 6, **caractérisée en ce que** la pièce de forme (50) constitue, à son extrémité proximale, un flasque élargi (48), qui forme la surface de verrouillage (70).

8. Robinetterie ou vanne d'arrêt selon l'une des revendications précédentes, **caractérisée en ce que** la poignée de manoeuvre (2) est réalisée au moins en deux parties, avec une base de poignée de manoeuvre (6) interagissant avec la surface de glissement (36) et avec une tête de poignée de manoeuvre (4) portant le dispositif de sécurité.

9. Robinetterie ou vanne d'arrêt selon la revendication 8, **caractérisée en ce que** la tête de poignée de manoeuvre (4) surmonte la base de poignée de manoeuvre (6) et est encliquetée avec celle-ci.

10. Robinetterie ou vanne d'arrêt selon la revendication 8 ou la revendication 9, **caractérisée en ce qu'**entre la tête de poignée de manoeuvre (4) et la broche (18) et/ou la pièce de forme (50), est formée une distance d'espacement (66), qui est dimensionnée de manière telle, que pour toute sollicitation manuelle de la poignée de manoeuvre (2), dans une position de verrouillage, un contact direct entre la tête de poignée de manoeuvre (4) et la broche (18) ou respectivement la pièce de forme (50), reste exclu.
